# EUROPÄISCHE PATENTSCHRIFT

(11) **EP 2 179 945 B1**
(45) Veröffentlichungstag und Bekanntmachung des Hinweises auf die Patenterteilung: **08.02.2012**
(21) Anmeldenummer: 09160341.5
(22) Anmeldetag: 15.05.2009
(51) Int. Cl.: B65G 47/08, B65G 57/26

(54) **Verfahren zur Beladung von Paletten und zur Bildung von Palettenlagen mit quaderförmigen Objekten**
Method for loading pallets and forming pallet layers with cuboid objects
Procédé de chargement de palettes et de formation de couches de palette composées d'objets de forme cubique

(30) Priorität: 22.10.2008 DE 102008052769
(43) Veröffentlichungstag der Anmeldung: 28.04.2010
(73) Patentinhaber: Krones AG, 93073 Neutraubling (DE)
(72) Erfinder: Hupfauer, Engelbert, 38527 Meine/Wedelheine (DE)
(74) Vertreter: Benninger, Johannes

(56) Entgegenhaltungen:
- DE-A1- 10 111 680
- US-A- 4 522 292

## Beschreibung

Die vorliegende Erfindung betrifft ein Verfahren zur Beladung von Paletten und zur Bildung von Palettenlagen mit quaderförmigen Objekten mit den Merkmalen des unabhängigen Anspruchs 1.

Die Beladung von Paletten mit Gebinden aus vier, sechs oder mehr Getränkebehältern kann auf unterschiedliche Weise erfolgen. Eine bekannte Beladungsvariante sieht ein Drehen einzelner Gebinde oder Gruppen von zwei, drei oder mehr hintereinander angeordneter Gebinde um jeweils 90 Grad um eine vertikale Achse vor, so dass sich bei aneinander geschobenen Gebinden ein stabileres Lagenbild ergibt. Das Drehen der Gebinde erfolgt üblicherweise durch seitliches Greifen während des kontinuierlichen Transports der Gebinde auf einem Förderband oder einer Horizontalfördereinrichtung und durch Verschwenken, ohne dass die Gebinde dabei angehoben werden müssen.

Auch die DE 101 11 680 A1 offenbart eine Vorrichtung zum Palettieren von etwa quaderförmigen Stückgütern. Zudem ist eine Stückgutzuführung mit Führungsmitteln zum Verdrehen der Stückgüter gezeigt. Weiterhin ist eine Schiebevorrichtung zum seitlichen Verschieben von Stückgutzeilen offenbart.

Eine weitere bekannte dem Oberbegriff des Anspruchs 1 zugrunde liegende Variante sieht die Beladung von Halbpaletten durch jeweils zehn gleichartige Gebinde vor. Dabei werden sog. Schrumpfgebinde, die jeweils aus insgesamt sechs Getränkebehältern mit je 1,5 Litern Inhalt gebildet sein können, paar- oder reihenweise auf ein bestimmtes Lagenbild gebracht und anschließend seitlich von der Fördereinrichtung auf die beiden nebeneinander stehenden Halbpaletten geschoben. Es kann auf diese Weise auf zwei Halbpaletten mit Grundabmessungen von ca. 600 mm x 800 mm gemeinsam palettiert werden, wonach die beiden Halbpaletten anschließend getrennt voneinander mit Folie umwickelt werden. Anschließend können die beiden Halbpaletten auf eine gemeinsame Euro-Trägerpalette gestellt werden. Normalerweise erfolgt anschließend eine Konturenprüfung, um sicherzustellen, dass die gebildeten Paletten kein vorgegebenes Maximalmaß überschreiten, was bspw. durch fehlerhaftes Stapeln und/oder Anordnen der Gebinde auf den Paletten der Fall sein kann. Die Konturenprüfung muss auf allen vier Seiten erfolgen, damit die Paletten ohne Übermaß im Hochregallager lagerfähig sind.

Wenn jedoch bei der Palettierung der Halbpaletten in der Mitte ein Überstand der Gebinde auftritt, sind die zwei Halbpaletten nach dem Wickeln um ca. eine halbe Flaschenbreite größer, weil die Lücke, in der das überstehende Gebinde ragt, zugewickelt ist. Die beiden Paletten sind dann insgesamt auf der Euro-Trägerpalette zu groß und die Konturenkontrolle löst aus bzw. meldet eine fehlerhaft angeordnete oder beladene Palette. Die Folge ist eine notwendige manuelle Korrektur und damit Zeitaufwand.

Das vorrangige Ziel der vorliegenden Erfindung besteht darin, ein Verfahren zur Verfügung zu stellen, das eine Platz sparende und stabile Anordnung von mehreren quaderförmigen Objekten, insbesondere von Gebinden auf einer Palette ermöglicht, ohne dass dabei einzelne Objekte oder Gebinde nach dem Ordnen auf der Palette ein vorgegebenes Außenmaß der Palette überragen.

Dieses Ziel der Erfindung wird mit dem Verfahren mit den Merkmalen des unabhängigen Anspruchs 1 erreicht. Merkmale vorteilhafter Weiterbildungen der Erfindung ergeben sich aus den abhängigen Ansprüchen. Das erfindungsgemäße Verfahren dient zur Beladung von Paletten und zur Bildung von Palettenlagen mit gleichartigen quaderförmigen Objekten mit nicht quadratischen Grundflächen, bei dem jeweils Reihen von mindestens zwei auf einer Fördereinrichtung nebeneinander und in Förderrichtung hintereinander stehenden Objekten um eine annähernd vertikale Achse um ca. 90 Grad gedreht werden, um gewünschte Lagenbilder der auf die Palette gebrachten Objekte zu erhalten, wobei eine Bodenfläche der Palette mindestens eine von den Objekten ganz oder teilweise umschlossene Lücke in einem mittleren Bereich aufweist. Dabei ist vorgesehen, dass zumindest eine, in Förderrichtung auf die Lücke der Palette folgende Reihe von um 90 Grad gedrehten Objekten derart in eine von zwei möglichen Drehrichtung gedreht wird, dass ein auf der Fördereinrichtung an hinterer Stelle angeordnetes Objekt der jeweiligen Reihe nach dem Drehen vor der Lücke in deren mittlerem Bereich angeordnet wird. Mit Hilfe des erfindungsgemäßen Verfahrens kann gewährleistet werden, dass die Objekte trotz Drehung einzelner Reihen von Objekten nicht gegeneinander verschoben werden. Insbesondere kann mit Hilfe des Verfahrens verhindert werden, dass einzelne Objekte bzw. Gebinde so verschoben werden, dass die Lücke im mittleren Bereich dadurch vergrößert wird, was zur Folge hätte, dass das entsprechend verschobene Objekt nach außen über die äußere Kontur der Palette hinausragen könnte, so dass die Palette ein vorgegebenes Maximalmaß überschreiten und ggf. nicht mehr von automatischen Handhabungseinrichtungen befördert werden könnte, bspw. in ein Hochregallager o. dgl.

Üblicherweise werden die Objekte vor dem Überschieben auf die Palette in einer quer zur Förderrichtung orientierten Überschubrichtung paar- oder reihenweise angeordnet, wobei die Paare und/oder Reihen jeweils voneinander beabstandet sind. Wenn im vorliegenden Zusammenhang von quaderförmigen Objekten die Rede ist, so können dies bspw. Gebinde von mit Folie umwickelten Getränkebehälter o. dgl. sein. Die quaderförmigen Objekte können jedoch auch Kartons oder andere Lagergüter sein, die jeweils gleiche Abmessungen aufweisen und in versetzter und/oder gedrehter Anordnung zueinander auf einer Palette abgestellt und anschließend dort fixiert werden können, bspw. durch Umwickeln mit einer Folie.

Beim erfindungsgemäßen Verfahren ist vorgesehen, dass die auf die Palette geschobene Lage von Objekten durch das Überschieben in Querrichtung zur Förderrichtung und gleichzeitiges Längsfördern in Förderrichtung ihr gewünschtes Lagenbild mit aneinander geschobenen Objekten erhält. Dabei werden die gedrehten Reihen von zwei, drei oder mehr nebeneinander bzw. in Förderrichtung hintereinander stehenden Objekten jeweils um einen Winkel von 90 Grad gedreht.

Je nach gewünschter Anordnung der Objekte kann eine nach der Ablage auf der Palette in Förderrichtung vorne stehende gedrehte Reihe von Objekten nach links bzw. gegen den Uhrzeigersinn gedreht werden. Andererseits kann es sinnvoll sein, eine nach der Ablage auf der Palette in Förderrichtung hinten stehende gedrehte Reihe von Objekten nach rechts bzw. im Uhrzeigersinn zu drehen. Diese Drehrichtungen beziehen sich auf eine Förderrichtung der Objekte, bei der eine Überschubrichtung der Lage nach links gerichtet ist.

Gemäß einer bevorzugten Variante ist vorgesehen, dass ausschließlich auf der Palette in Förderrichtung hinten oder vorne stehende Reihen von zwei, drei oder mehr Objekten vor der Ablage auf der Palette jeweils um 90 Grad gedreht werden. Zudem werden die quaderförmigen Objekte vor dem Drehen und/oder Ablegen auf der Palette mit ihren Breitseiten voran befördert.

Eine Ausführungsvariante der Erfindung sieht zudem vor, dass auf einer Palette insgesamt mindestens acht quaderförmige Objekte abgelegt werden, wobei an den in Förderrichtung linken und rechten Randbereichen jeweils nicht gedrehte Paare von zwei hintereinander stehenden Objekten angeordnet werden, und wobei an den in Förderrichtung vorderen und hinteren Randbereichen der Palette jeweils um 90 Grad gedrehte Paare von zwei hintereinander stehenden Objekten abgelegt werden.

Wahlweise können auch auf einer Palette insgesamt zehn Objekte abgelegt werden, wobei an den in Förderrichtung linken und rechten Randbereichen jeweils nicht gedrehte Paare von zwei hintereinander stehenden Objekten angeordnet werden, und wobei an den in Förderrichtung vorderen und hinteren Randbereichen der Palette jeweils um 90 Grad gedrehte Reihen von drei Objekten abgelegt werden.

Dabei werden die gedrehten Paare oder Reihen sowie die nicht gedrehten Paare von Objekten derart versetzt auf der Palette angeordnet, dass ein randseitig links oder rechts angeordnetes Paar von nicht gedrehten Objekten an den vorderen Rand der Palette und das jeweils andere Paar an den hinteren Rand der Palette grenzt. Alternativ hierzu können die gedrehten Reihen sowie die nicht gedrehten Paare von Objekten auch derart versetzt auf der Palette angeordnet werden, dass eine randseitig vorne oder hinten angeordnete Reihe von um 90 Grad gedrehten Objekten an den linken und die jeweils andere Reihe an den rechten seitlichen Randbereich der Palette grenzt. Gleichzeitig grenzen alle nicht an den äußeren Ecken der Palette stehenden Objekte an die mittig in der Palette gebildete Lücke.

Bei einer bevorzugten Ausführungsvariante werden jeweils zwei nebeneinander stehende und in Förderrichtung nacheinander angeordnete Paletten gemeinsam beladen, anschließend separat verpackt und/oder danach wieder gemeinsam verladen und/oder in ein Lager verbracht. Diese beiden Paletten werden jeweils durch Halbpaletten gebildet, die nach dem Verpacken nebeneinander auf einer Euro- bzw. Norm-Palette abgelegt und mittels dieser weiter gehandhabt, transportiert und/oder gelagert werden. Als Objekte kommen insbesondere Gebinde von paarweise in Reihen von sechs, acht oder mehr zusammengefasste Getränkebehälter in Frage, insbesondere in Gestalt von Getränkeflaschen.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig.1: zeigt schematisch eine Draufsicht auf ein Lagenbild zweier nebeneinander angeordneter Halbpaletten mit darauf abgelegten Gebinden mit jeweils sechs Getränkebehältern.
- Fig. 2: zeigt eine Draufsicht auf zwei Gebindegruppen, die auf eine Halbpalette gefördert werden.
- Fig. 3: zeigt eine Draufsicht auf zwei Gebindegruppen, deren obere um 90 Grad gedreht wurde.
- Fig. 4: zeigt eine Draufsicht auf zwei Gebindegruppen, deren untere um 90 Grad gedreht wurde.
- Fig. 5: zeigt ein Lagenbild aus insgesamt zwanzig Gebinden mit einer fehlerhaft beladenen rechten Halbpalette.
- Fig. 6: zeigt ein Lagenbild aus insgesamt zwanzig Gebinden mit optimal beladenen rechten und linken Halbpaletten.

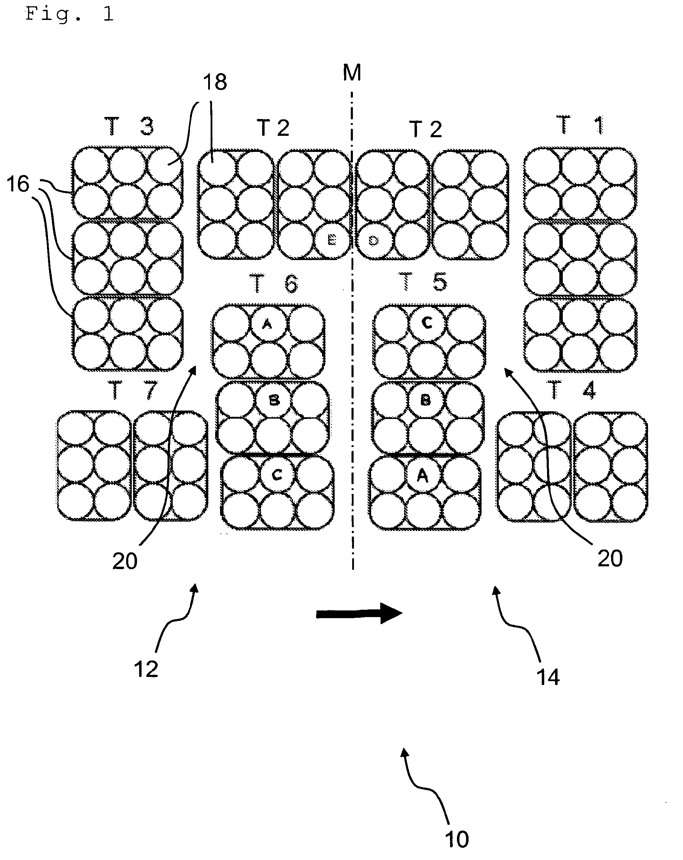

Die schematische Darstellung der Fig. 1 zeigt ein typisches Ablagebild einer Palette 10 in Gestalt zweier nebeneinander angeordneter Halbpaletten 12 und 14, auf die mit einer Förderrichtung von links nach rechts jeweils nicht gedrehte Paare T2, T4 und T7 aus zwei Gebinden 16 und um jeweils 90 Grad gedrehte Reihen T1, T5, T6, T3 von jeweils drei Gebinden 16 geschoben sind. Im gezeigten Ausführungsbeispiel umfasst jedes Gebinde 16 insgesamt sechs Getränkebehälter 18, die bspw. mit einer Schrumpffolie umwickelt sein können. Mit den rechts angeordneten Gebinden T1, T2, T4 und T5 wird die rechte Halbpalette 14 beladen, während die links angeordneten Gebinde T2, T3, T6 und T7 die Lage für die linke Halbpalette 12 bilden. Beide Halbpaletten 12 und 14 werden anschließend getrennt voneinander verpackt, bspw. mit Folie umwickelt, und können anschließend auf eine gemeinsame Trägerpalette 10, bspw. in einem herkömmlichen Euromaß abgelegt werden.

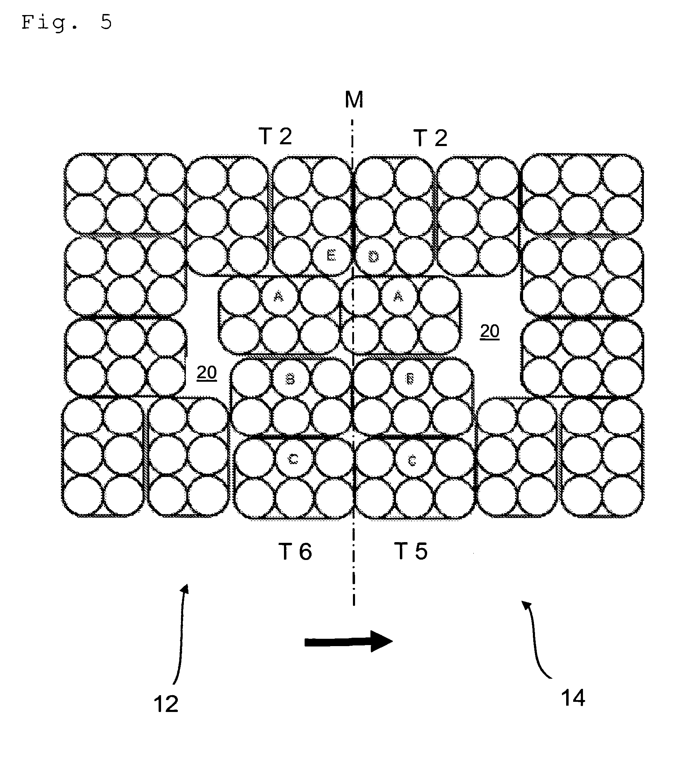

Es ist deutlich erkennbar, dass die Grundrisse der vier Gebindegruppen T1, T2, T4 und T5 bzw. T2, T3, T6 und T7 der rechten bzw. linken Halbpaletten 14, 12 derart in einem Rechteck angeordnet sind, dass von den jeweils vier Gebindegruppen jeder Halbpalette 12, 14 eine in der Mitte befindliche Lücke 20 bzw. ein Kamin verbleibt, die/der nicht von Gebinden bedeckt ist. Diese Lücke 20 kann unter Umständen zu ungünstigen Beladungssituationen führen, wie anhand der Fig. 5 verdeutlicht wird.

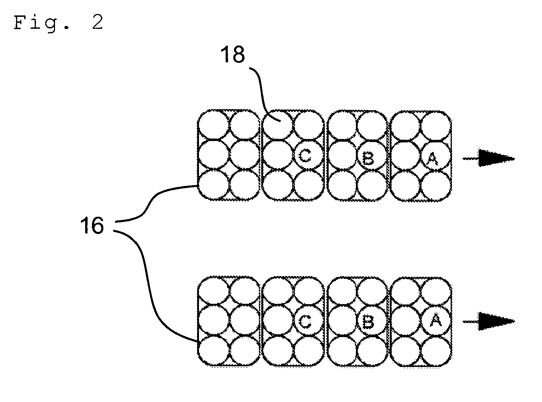

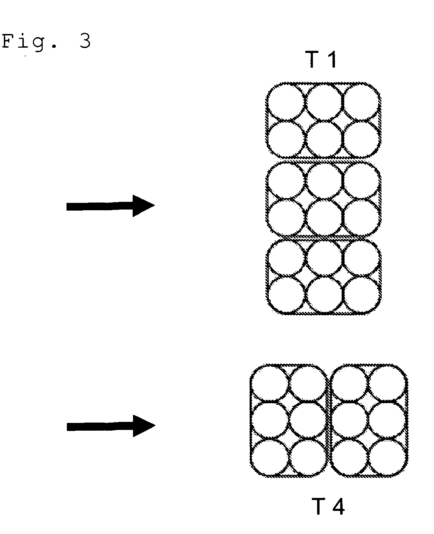

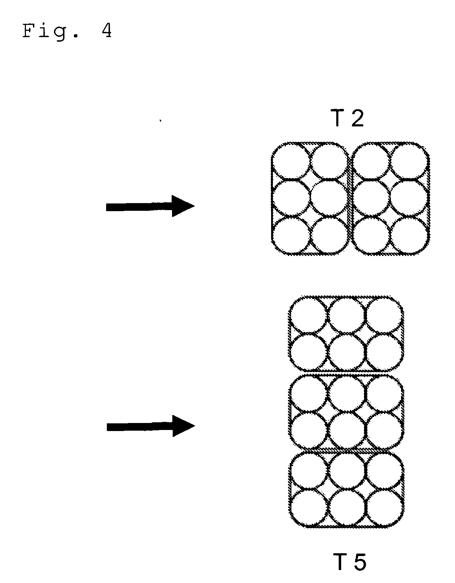

Die Darstellung der Fig. 2 verdeutlicht beispielhaft zwei parallel geförderte Reihen von insgesamt vier Gebinden 16, die auf einer gemeinsamen Fördereinrichtung nach rechts gefördert werden können. Aus Teilen dieser Reihe können die nicht gedrehten Paare oder die um 90 Grad gedrehten Reihen von drei Gebinden 16 gebildet werden, wie dies in Fig. 3 und Fig. 4 beispielhaft angedeutet ist.

So kann die in Fig. 3 dargestellte obere Reihe T1 von drei Gebinden 16 um 90 Grad nach rechts, d.h. im Uhrzeigersinn, oder nach links, d.h. im Gegenuhrzeigersinn, gedreht sein, während das untere Paar T4 ohne Drehung nach rechts gefördert wird. Beide Gebindegruppen T1 und T4 werden dann auf der rechten Halbpalette 14 ganz rechts abgelegt. Weiterhin kann die in Fig. 4 dargestellte untere Reihe T5 von drei Gebinden 16 um 90 Grad nach links oder rechts gedreht sein, während das obere Paar T2 ohne Drehung nach rechts gefördert wird. Beide Gebindegruppen T2 und T5 werden dann auf der rechten Halbpalette 14 neben den zuvor abgelegten Gebindegruppen T1 und T4 abgelegt und liegen damit am linken Rand der rechten Halbpalette. In gleicher Weise wird anschließend das Lagenbilde für die linke Halbpalette 12 gebildet, bevor die Palette 10 durch Überschieben der entsprechend Fig. 1 gruppierten Gebindegruppen beladen wird.

Die schematische Darstellung der Fig. 5 verdeutlicht ein Lagenbild aus insgesamt zwanzig Gebinden 16, die jeweils aneinander geschoben sind. Das in Fig. 5 gezeigte Lagenbild ist für die weitere Handhabung der Halbpaletten 12 und 14 sehr ungünstig, da der Überstand des Gebindes A am linken Rand der rechten Halbpalette 14 dazu führen kann, dass eine Konturenabtastung einen Fehler liefert, da eine Halbpalette, deren Rand über die maximale Außenkontur ragt, unter Umständen nicht in ein zur Lagerung vorgesehenes Regallager bzw. Hochregallager passt.

Dabei laufen jeweils die Gebinde A, B und C der gedrehten Reihen T5 und T6 als Dreierblöcke in die Drehrichtung und werden als solcher gemeinsam nach links gedreht. Das Gebinde A wird dabei am stärksten gegen die Fahrtrichtung gebremst und braucht am längsten, bis es den dadurch entstandenen Schlupf überwunden hat. Allerdings bleibt es dabei soweit zurück, dass es beim Überschieben der gesamten Lage nach links ausbrechen kann, so dass dieses Gebinde A der Reihe T5 der rechten Halbpalette 14 über die Mittellinie M zu dem Gebinde E des Paares T2 der linken Halbpalette 12 abdriftet. Da es sich um eine sog. Kaminlage links von der Lücke 20 handelt, bei der die beiden Gebinde A der Gruppen T5 und T6 keinen Gegendruck bekommen, bleibt das Gebinde A der rechten Gruppe T5 als überstehendes Gebinde erhalten, wie dies in Fig. 5 dargestellt ist. Dieses Lagenbild kann die Weiterverarbeitung stören.

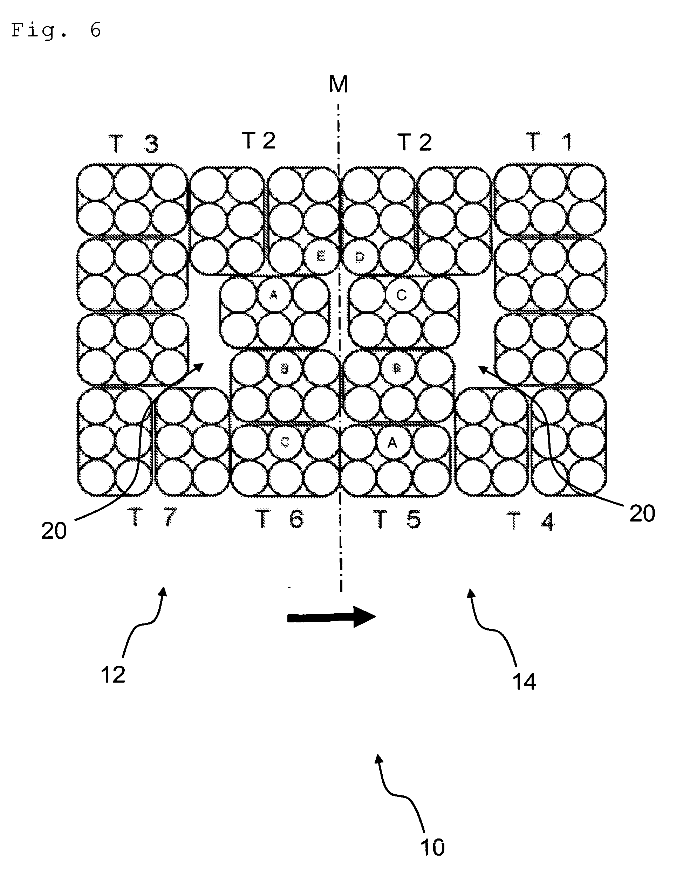

Aus diesem Grund werden die Gebindereihen T5 und T6 so gedreht, dass der Überstand gemäß Fig. 5 nicht mehr auftritt, sondern dass sich ein Lagenbild wie in Fig. 6 dargestellt ergeben kann. Dies wird dadurch erreicht, dass die Gebindereihe T5 nicht nach links, sondern nach rechts gedreht wird, so dass das in Bezug auf das nach rechts laufende Förderband am stärksten verzögerte Gebinde A nach unten zu liegen kommt, so dass das in der Reihe hinten angeordnete Gebinde C lediglich gedreht und nur unwesentlich auf der Fördereinrichtung verschoben wird, so dass sich keine nennenswerte Verzögerung ergibt. Das Gebinde C von T5 bricht dann beim Überschub nicht oder eher nach rechts aus, so dass es rechts vom Gebinde D des darüber angeordneten Paares T2 bleibt und kein Überstand über die Mittellinie M auftritt. Die Gruppe T6 der linken Halbpalette 12 kann dagegen weiterhin nach links gedreht werden, so dass das Gebinde A der Gruppe T6 links vom Gebinde E der darüber angeordneten Gruppe T2 verbleibt. Auf diese Weise wird ein einwandfreies Lagenbild erzeugt.

Nach dem Zusammenschieben und einem Überschub der Gebinde nach oben, d.h. senkrecht zur Förderrichtung des Förderbandes, ergibt sich ein Lagenbild wie in Fig. 6 dargestellt, das keinen Überstand am Außenumriss der Halbpaletten 12, 14 zeigt, so dass die Halbpaletten problemlos zu handhaben sind.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. Verfahren zur Beladung von Paletten (10) und zur Bildung von Palettenlagen mit gleichartigen quaderförmigen Objekten mit nicht quadratischen Grundflächen, bei dem jeweils Reihen (T1, T3, T5, T6) von mindestens zwei auf einer Fördereinrichtung in Förderrichtung hintereinander stehenden Objekten um eine annähernd vertikale Achse um ca. 90 Grad gedreht werden, um gewünschte Lagenbilder der auf die Palette (10) gebrachten Objekte mit gedrehten und nicht gedrehten Reihen (T2, T4, T7) zu erhalten, wobei eine Bodenfläche der Palette (10) oder ein Lagenbild der Palettenlage mindestens eine von den Objekten ganz oder teilweise umschlossene Lücke (20) in einem mittleren Bereich aufweist, **dadurch gekennzeichnet, dass** zumindest eine, in Förderrichtung auf die Lücke (20) der Palette (10) oder des Lagenbildes der Palettenlage folgende Reihe (T5) von um 90 Grad gedrehten Objekten derart in eine von zwei möglichen Drehrichtung gedreht wird, dass ein auf der Fördereinrichtung an hinterer Stelle angeordnetes Objekt (C) der jeweiligen Reihe nach dem Drehen vor der Lücke (20) in deren mittlerem Bereich angeordnet wird.

2. Verfahren nach Anspruch 1, bei dem die Objekte vor dem Überschieben auf die Palette (10) in einer quer zur Förderrichtung orientierten Überschubrichtung paar- oder reihenweise angeordnet sind, wobei die Paare und/oder Reihen jeweils voneinander beabstandet sind.

3. Verfahren nach Anspruch 1 oder 2, bei dem die auf die Palette (10) geschobene Lage von Objekten durch das Überschieben in Querrichtung zur Förderrichtung und gleichzeitiges Längsfördern in Förderrichtung ihr gewünschtes Lagenbild mit aneinander geschobenen Objekten erhält.

4. Verfahren nach einem der Ansprüche 1 bis 3, bei dem ausschließlich auf der Palette (10) in Förderrichtung hinten oder vorne stehende Reihen von zwei, drei oder mehr Objekten vor der Ablage auf der Palette (10) jeweils um 90 Grad gedreht werden.

5. Verfahren nach einem der Ansprüche 1 bis 4, bei dem die quaderförmigen Objekte vor dem Drehen und/oder Ablegen auf der Palette (10) mit ihren Breitseiten voran befördert werden.

6. Verfahren nach einem der Ansprüche 1 bis 5, bei dem auf einer Palette (10) insgesamt mindestens acht quaderförmige Objekte abgelegt werden, wobei an den in Förderrichtung linken und rechten Randbereichen jeweils nicht gedrehte Paare von zwei hintereinander stehenden Objekten angeordnet werden, und wobei an den in Förderrichtung vorderen und hinteren Randbereichen der Palette (10) jeweils um 90 Grad gedrehte Paare von zwei hintereinander stehenden Objekten abgelegt werden.

7. Verfahren nach einem der Ansprüche 1 bis 5, bei dem auf einer Palette (10) insgesamt zehn Objekte abgelegt werden, wobei an den in Förderrichtung linken und rechten Randbereichen jeweils nicht gedrehte Paare von zwei hintereinander stehenden Objekten angeordnet werden, und wobei an den in Förderrichtung vorderen und hinteren Randbereichen der Palette (10) jeweils um 90 Grad gedrehte Reihen von drei Objekten abgelegt werden.

8. Verfahren nach einem der Ansprüche 1 bis 7, bei dem die gedrehten Paare oder Reihen sowie die nicht gedrehten Paare von Objekten derart versetzt auf der Palette (10) angeordnet werden, dass ein randseitig links oder rechts angeordnetes Paar von nicht gedrehten Objekten an den vorderen Rand der Palette (10) und das jeweils andere Paar an den hinteren Rand der Palette (10) grenzt.

9. Verfahren nach einem der Ansprüche 1 bis 7, bei dem die gedrehten Reihen sowie die nicht gedrehten Paare von Objekten derart versetzt auf der Palette (10) angeordnet werden, dass eine randseitig vorne oder hinten angeordnete Reihe von um 90 Grad gedrehten Objekten an den linken und die jeweils andere Reihe an den rechten seitlichen Randbereich der Palette (10) grenzt.

10. Verfahren nach einem der Ansprüche 1 bis 9, bei dem alle nicht an den äußeren Ecken der Palette (10) stehenden Objekte an die mittig in der Palette (10) bzw. im Lagenbild der Palettenlage gebildete Lücke (20) grenzen.

11. Verfahren nach einem der Ansprüche 1 bis 10, bei dem jeweils zwei nebeneinander stehende und in Förderrichtung nacheinander angeordnete Paletten (10) gemeinsam beladen, anschließend separat verpackt und/oder danach wieder gemeinsam verladen und/oder in ein Lager verbracht werden.

12. Verfahren nach Anspruch 11, bei dem die beiden Paletten jeweils durch Halbpaletten (12, 14) gebildet werden, die nach dem Verpacken nebeneinander auf einer Euro- bzw. Norm-Palette abgelegt und mittels dieser weiter gehandhabt, transportiert und/oder gelagert werden.

13. Verfahren nach einem der Ansprüche 1 bis 12, bei dem die quaderförmigen Objekte durch Gebinde (16) von paarweise in Reihen von sechs, acht oder mehr zusammengefasste Getränkebehälter (18), insbesondere in Gestalt von Getränkeflaschen, gebildet werden.

## Claims

1. Method for loading pallets (10) and forming pallet layers with uniform, cuboid, non-square objects, whereby rows (T1, T3, T5, T6) of at least two objects, which are arranged one after the other in conveying direction on a conveying device, are each rotated by approximately 90 degrees around a nearly vertical axis in order to obtain desired layer patterns with rotated rows and non-rotated rows (T2, T4, T7) of the said objects that are aligned on the pallet (10), whereby a bottom area of the pallet (10) or a layer pattern of the pallet layer comprises at least one gap (20), which is completely or partly enclosed by the objects and which is located in a central area, **characterized in that** at least one row (T5) of objects rotated by 90 degrees and following after the gap (20) of the pallet (10) or of the layer pattern of the pallet layer in conveying direction is rotated in one of two possible rotating directions in such a way that an object (C) arranged at a rear point in the respective row on the conveying device will, after rotation, be arranged before the gap (20) in its central area.

2. Method according to claim 1, wherein the objects are arranged in pairs or rows before being transferred to the pallet (10), whereby said pairs or rows are aligned in a transfer direction that runs transversely to the conveying direction, and whereby said pairs and/or rows are spaced apart from each other.

3. Method according to claim 1 or 2, wherein the layer of objects is aligned in the desired layer pattern by being pushed together in the process of being transferred to the pallet (10) transversely to the conveying direction and, simultaneously, by being transferred longitudinally to the conveying direction.

4. Method according to one of the claims 1 to 3, wherein exclusively rows of two, three or more objects are rotated by 90 degrees each, with the rotation process being performed before the said rows are layered on the pallet (10) and aligned in a rear or front position in relation to the conveying direction.

5. Method according to one of the claims 1 to 4, wherein the cuboid objects are moved forward wide sides first before they are rotated and/or layered onto the pallet (10).

6. Method according to one of the claims 1 to 5, wherein a total of at least eight cuboid objects are layered onto a pallet (10), **characterized in that** non-rotated pairs of two consecutive objects are arranged each at the pallet outer edges that are positioned left and right relative to the conveying direction, and further in that pairs of two consecutive objects, with each pair rotated by 90 degrees, are arranged at the outer edges of the pallet that are positioned at the front and rear (10) in relation to the conveying direction.

7. Method according to one of the claims 1 to 5, wherein a total of ten cuboid objects are layered onto a pallet (10), **characterized in that** non-rotated pairs of two consecutive objects are arranged each at the pallet outer edges that are positioned left and right relative to the conveying direction, and further **in that** rows of three consecutive objects, with each row rotated by 90 degrees, are arranged at the outer edges of the pallet that are positioned at the front and rear (10) in relation to the conveying direction.

8. Method according to one of the claims 1 to 7, wherein the rotated pairs or rows of objects as well as the non-rotated pairs of objects are arranged offset on the pallet (10) in such a way that a pair of unrotated objects aligned at the left or right edge of the pallet (10) abuts with the front edge of the pallet (10) and the other pair abuts with the rear edge of the pallet (10), respectively.

9. Method according to one of the claims 1 to 7, wherein the rotated rows of objects as well as the non-rotated pairs of objects are arranged offset on the pallet (10) in such a way that a row of objects rotated by 90 degrees and aligned at the front or rear edge of the pallet (10) abuts with the left edge of the pallet (10) and the other row abuts with the right lateral edge of the pallet (10), respectively.

10. Method according to one of the claims 1 to 9, wherein all objects that are not positioned at the outer corners of the pallet (10) abut with the gap (20) located in the central area of the pallet (10) or of the layer pattern of the pallet layer.

11. Method according to one of the claims 1 to 10, wherein every two adjacent pallets (10) that are arranged consecutively in relation to the conveying direction are loaded in one work step together and subsequently packaged separately and/or then shipped both together again and/or moved to a storage facility.

12. Method according to claim 11, wherein the two pallets are each formed by half-pallets (12, 14), which are placed next to each other on a Euro-pallet or a norm pallet after packaging, and are then further handled, transported, and/or stored by means of the said Euro- or norm pallet.

13. Method according to one of the claims 1 to 12, wherein the cuboid objects are formed by packages (16) of beverage containers (18), particularly in the form of beverage bottles, that are assembled pairwise in rows of six, eight, or more beverage containers.

## Revendications

1. Procédé pour le chargement de palettes (10) et pour la formation de couches de palettes avec des objets similaires parallélépipédiques avec des surfaces de base non carrées, dans lequel des séries respectives (T1, T3, T5, T6) d'au moins deux objets placés l'un derrière l'autre dans le sens de transport sur un équipement de manutention sont tournés d'environ 90 degrés autour d'un axe approximativement vertical afin d'obtenir des configurations de couches souhaitées des objets transférés sur la palette (10) avec des séries tournées et non tournées (T2, T4, T7), étant donné qu'une surface de base de la palette (10) ou une configuration de la couche de palettes présente dans une zone médiane au moins un vide (20) cerné entièrement ou partiellement par les objets, **caractérisé en ce que** au moins une série (T5) située dans le sens de transport en aval du vide (20) de la palette (10) ou de la configuration de la couche de palettes est tournée par des objets eux-mêmes tournés de 90 degrés dans un de deux sens de rotation possibles de manière à ce qu'un objet (C) de la série respective, disposé à l'arrière sur l'équipement de manutention, soit disposé après la rotation en amont du vide (20) dans sa zone médiane.

2. Procédé selon la revendication 1, dans lequel les objets sont disposés en paires ou en séries avant le transfert sur la palette (10) dans un sens de transfert transversal par rapport au sens de transport, étant donné que les paires et/ou séries sont respectivement espacées l'une de l'autre.

3. Procédé selon la revendication 1 ou 2, dans lequel la couche d'objets transférée sur la palette (10) obtient, par le glissement dans le sens transversal par rapport au sens de transport et le transport longitudinal simultané dans le sens de transport, la configuration souhaitée avec des objets poussés l'un contre l'autre.

4. Procédé selon l'une quelconque des revendications 1 à 3, dans lequel exclusivement des séries, se trouvant sur la palette (10) à l'arrière ou à l'avant dans le sens de transport, de deux, trois ou encore plus d'objets sont tournées respectivement de 90 degrés avant le dépôt sur la palette (10).

5. Procédé selon l'une quelconque des revendications 1 à 4, dans lequel les objets parallélépipédiques sont transportés avant la rotation et/ou le dépôt sur la palette (10) avec leurs côtés larges par-devant.

6. Procédé selon l'une quelconque des revendications 1 à 5, dans lequel sont déposés sur une palette (10) en tout au moins huit objets parallélépipédiques, étant donné que sont disposées sur les zones marginales gauche et droite dans le sens de transport respectivement des paires non tournées de deux objets situés l'un derrière l'autre, et étant donné que sont déposés dans le sens de transport sur les zones marginales avant et arrière de la palette (10) des paires de deux objets situés l'un derrière l'autre respectivement tournés de 90 degrés.

7. Procédé selon l'une quelconque des revendications 1 à 5, dans lequel sont déposés sur une palette (10) en tout au moins dix objets, étant donné que sont disposées sur les zones marginales gauche et droite dans le sens de transport respectivement des paires non tournées de deux objets situés l'un derrière l'autre, et étant donné que sont déposés dans le sens de transport sur les zones marginales avant et arrière de la palette (10) des séries de trois objets situés l'un derrière l'autre respectivement tournés de 90 degrés.

8. Procédé selon l'une quelconque des revendications 1 à 7, dans lequel les paires ou séries tournées ainsi que les paires d'objets non tournées sont disposées de façon décalée sur la palette (10) de manière à ce qu'une paire d'objets non tournés disposée sur le bord gauche ou droit soit confinée au bord avant de la palette (10) et l'autre paire respective soit confinée au bord arrière de la palette (10).

9. Procédé selon l'une quelconque des revendications 1 à 7, dans lequel les séries tournées ainsi que les paires d'objets non tournées sont disposées de façon décalée sur la palette (10) de manière à ce qu'une série d'objets tournés de 90 degrés disposée sur le bord avant ou arrière soit confinée à la zone marginale latérale gauche et l'autre paire respective soit confinée à la zone marginale latérale droite de la palette (10).

10. Procédé selon l'une quelconque des revendications 1 à 9, dans lequel tous les objets ne se trouvant pas aux coins extérieurs de la palette (10) sont confinés au vide (20) formé centralement dans la palette (10) ou dans la configuration de la couche de palettes.

11. Procédé selon l'une quelconque des revendications 1 à 10, dans lequel chaque fois deux palettes (10) se trouvant l'une à côté de l'autre et disposées l'une derrière l'autre dans le sens de transport sont chargées ensemble, ensuite emballées séparément et/ou ensuite de nouveau chargées ensemble et/ou transportées dans un magasin.

12. Procédé selon la revendication 11, dans lequel les deux palettes sont formées respectivement par des demi-palettes (12, 14) qui, après l'emballage, sont déposées l'une à côté de l'autre sur une europalette ou palette normalisée, puis manutentionnées, transportées et/ou mises en stock au moyen de cette dernière.

13. Procédé selon l'une quelconque des revendications 1 à 12, dans lequel les objets parallélépipédiques sont formés par des packs (16) de récipients de liquide (18), en particulier sous forme de bouteilles de boissons, regroupés paire par paire en séries de six, huit ou plus.
